## Europäisches Patentamt

## European Patent Office

## Office européen des brevets

(19)

(11) Veröffentlichungsnummer: **0 277 305**
**B1**

(12)

# EUROPÄISCHE PATENTSCHRIFT

(45) Veröffentlichungstag der Patentschrift:
05.07.89

(51) Int. Cl.⁴: **B60D 1/00**

(21) Anmeldenummer: **87117635.0**

(22) Anmeldetag: **28.11.87**

(54) **Zur Zugbildung geeigneter Omnibus.**

(30) Priorität: **09.01.87 DE 3700464**

(43) Veröffentlichungstag der Anmeldung:
**10.08.88 Patentblatt 88/32**

(45) Bekanntmachung des Hinweises auf die Patenterteilung:
**05.07.89 Patentblatt 89/27**

(84) Benannte Vertragsstaaten:
**ES FR GB IT NL**

(56) Entgegenhaltungen:
**DE-C- 2 643 325**
**US-A- 2 051 186**
**US-A- 2 552 885**
**US-A- 2 879 079**
**US-A- 4 240 647**

(73) Patentinhaber: **Daimler-Benz Aktiengesellschaft,
Postfach 600202 Mercedesstrasse 136,
D-7000 Stuttgart 60(DE)**

(72) Erfinder: **Titz, Walter, Hermann-Löns-Weg 2,
D-7159 Auenwald 3(DE)**

ACTORUM AG

## Beschreibung

Die Erfindung betrifft einen zur Zugbildung geeigneten Omnibus nach dem Oberbegriff von Anspruch 1, wie er beispielsweise aus der DE-A-2 643 325 als bekannt hervorgeht.

Bei dem bekannten Omnibus sind die Front- bzw. die Heckkupplung nicht ortsfest angebracht, sondern in kreisbogenförmigen horizontal verlaufenden Führungsschienen seitlich verschiebbar, und zwar sind die Führungsschienen jeweils konzentrisch zum Mittelpunkt der antreibbaren Hinterachse der Omnibusse gekrümmt. Auf diese Weise stellt sich beim aneinanderkuppeln von Omnibussen die seitenverschiebbare Kupplungseinrichtung selbsttätig in die Verbindungslinie zwischen dem Mittelpunkt der antreibbaren Hinterachse des vorderen Busses zum Mittelpunkt der antreibbaren Hinterachse des hinteren Busses. Sinn dieser Anordnung ist es, auf die aneinandergekuppelten Busse durch Reaktionskräfte innerhalb der Kupplungseinrichtung aufs Kurvenäußere gerichtete Querkräfte auszuüben, die tendenziell die spurgeführten Busse dem auf der kurvenäußeren Seite befindlichen Querführungssteg zudrängen sollen und eine Spurführung entlang des kurvenäußeren Querführungssteges sicherstellen sollen, weil auf der kurveninneren Seite ein Kontakt der Spurführungsorgane mit dem entsprechenden Querführungssteg leicht verlohren gehen kann. Ein wesentlicher Grund für das Verlorengehen eines Spurführungskontaktes auf der kurveninneren Seite ist bei engen Kurven der, daß bei engen Kurven häufig der kurveninnere Querführungssteg weggelassen wird, weil der Seitenversatz der nachlaufenden Hinterachse in engen Kurven größer ist als der lichte Freiraum zwischen den Fahrzeugrädern und den Querführungsstegen bei Geradeausfahrt.

Die Zugbildung von spurführbaren Dual-Mode-Bussen unterschiedlicher Linien wird bei hohem Verkehrsaufkommen und teilweise gemeinsam benutzter Fahrstrecke zweckmäßig, weil zusammengekuppelte Busse als eine Fahrzeugeinheit angesehen werden und dadurch je Zeiteinheit mehr Omnibusse durch eine hochbelastete Spurführungsstrecke hindurchschleusbar sind. Nachteilig an dem bekannten Kuppelsystem für Omnibusse ist, daß die Kupplungseinrichtung sehr kurz und somit vom Fahrer des hinteren anzukuppelnden Omnibusses beim Ankuppelvorgang nicht einsehbar ist; es ist also beim Ankuppeln stets eine zweite Person erforderlich. Ein weiterer Nachteil des bekannten Omnibusses besteht darin, daß die Front- und die Heckkupplung in sehr häßlicher Weise die Stirnwände der Omnibusse verunstalten.

Aufgabe der Erfindung ist es, den gattungsmäßig zugrundegelegten Omnibus dahingehend auszugestalten, daß die Omnibusse trotz der Anbringung von Front und Heckkupplungen ihr gewohntes, vom Publikum akzeptiertes Aussehen beibehalten können und daß ein Ankoppeln eines Busses an eine vorausbefindlichen Busses ohne zweite Person oder ohne Aussteigen des Fahrers möglich ist.

Diese Aufgabe wird erfindungsgemäß durch die kennzeichnenden Merkmale von Anspruch 1 gelöst.

Dank der Ausfahrbarkeit bzw. Einziehbarkeit der Front- und/oder der Heckkupplung behalten diese bei Einzeleinsatz der Omnibusse ihr formschönes Aussehen, weil die Kupplungen bis hinter die Außenhaut der Fahrzeuge zurückziehbar sind. Andererseits können die Kupplungen, zumindest aber die Frontkupplung soweit ausgefahren werden, daß die Kupplungsköpfe beim Ankupplungsvorgang vom Fahrer des hinteren Omnibusses einsehbar und entsprechend dirigierbar sind. Um ein Ausknicken des Zuges während der Fahrt im Verbund zu verhindern, ist die simultane und gleichmäßige Traktions- bzw. Bremssteuerung aller im Zug verbundenen Omnibusse vom vorderen Fahrerplatz aus vorgesehen. Die Kupplungseinrichtung dient also nicht zur Antriebskraft- oder Bremskraftübertragung, sondern nur zur Abstandshaltung Sie muß lediglich Unterschiede der Zug- bzw. Bremskraft zwischen den einzelnen Omnibussen übertragen, die jedoch erfahrungsgemäß nur so klein sind, so daß selbst bei Schräglage der Kuppelstange eine Ausknickgefahr nicht besteht, weil die Seitenführungskräfte der Fahrzeugachsen und der Spurführungseinrichtung ausreichend groß sind, um die durch die Schräglage der Kuppelstange und Zug- bzw. Bremskraftunterschiede hervorgerufene Querkraftkomponenten sicher auffangen zu können.

Zweckmäßige Ausgestaltungen der Erfindung können den Unteransprüchen entnommen werden. Im übrigen ist die Erfindung anhand verschiedener in den Zeichnungen dargestellter Ausführungsbeispiele nachfolgend noch erläutert; dabei zeigen:

Figure 1 und 2 Seitenansicht (Figur 1) und Grundriß (Figur 2) zweier aneinandergekoppelter Omnibusse gemäß einem ersten Ausführungsbeispiel einer Kupplungseinrichtung,

Figur 3 den Grundriß eines weiteren Ausführungsbeispieles einer Kupplungseinrichtung für zwei aneinander gekoppelte Omnibusse,

Figur 4 bis 7 Seitenansicht (Figur 4) bzw. Grundriß (Figur 5 bis 7) - jeweils in unterschiedlichen Betriebslagen - der Kuppelstange bzw. des zugehörigen Führungsrohres des Ausführungsbeispieles nach Figur 1 und 2 in vergrößerter ausschnittsweiser Einzeldarstellung und

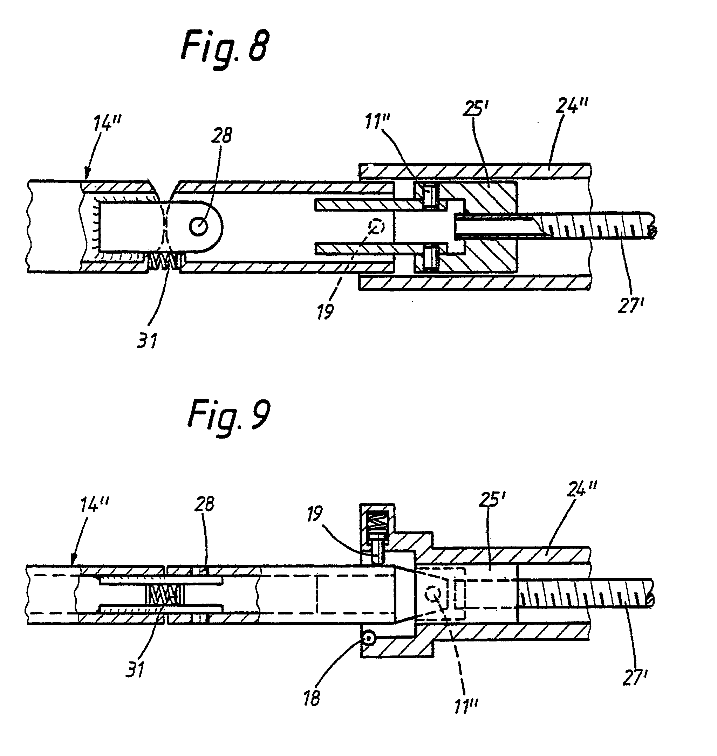

Figur 8 und 9 Seitenansicht (Figur 8) und Grundriß (Figur 9) eines weiteren Ausführungsbeispieles einer Kuppelstang mit Führungsrohr.

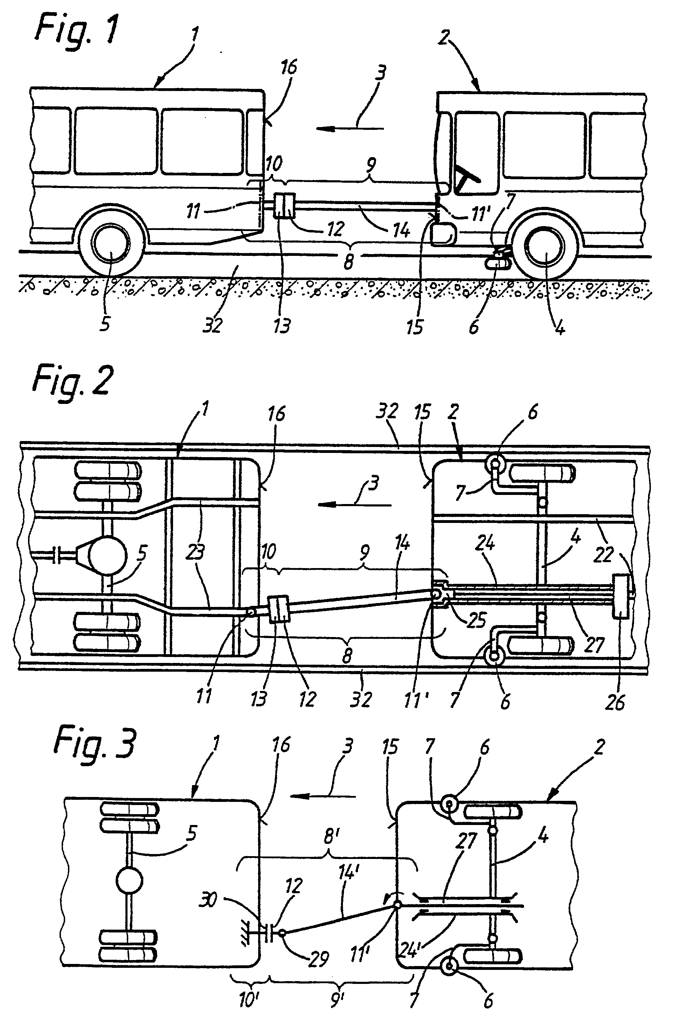

In den Figuren 1 bis 3 sind - in unterschiedlichen Ausführungsbeispielen - zwei Omnibusse 1 und 2 dargestellt, die mittels einer Kupplungseinrichtung 8 bzw. 8' in Fahrtrichtung 3 fluchtend aneinander gekoppelt sind. Der vordere Omnibus 1 ist nur mit seinem hinteren Teil und der antreibbaren Hinterachse 5 dargestellt, wogegen der Hintere Omnibus 2 nur mit seinem vorderen Teil und der lenkbaren Vorderachse 4 dargestellt ist. Die Spurführbarkeit der Omnibusse ist durch Querführungsrollen 6 gegeben, die über Haltearme 7 den einschlagbaren Vorderrädern in unveränderter Relativlage starr zugeordnet sind. Die Querführungsrollen 6 wirken bei Spurführung mit fahrbahnseitigen seitlich angeordneten und spur bestimmenden Querführungsstegen

2

32 zusammen. Die Kupplungseinrichtung 8 bzw. 8′ ist geteilt bzw. teilbar in eine Frontkupplung 9 bzw. 9′ und in eine Heckkupplung 10 bzw. 10′ die dem Frontbereich bzw. dem Heckbereich eines jeden der beiden Omnibusse 2 bzw. 1 zugeordnet sind. Den Front- bzw. Heckkupplungen ist jeweils noch ein Frontkupplungskopf 12 bzw. ein Heckkupplungskopf 13 zugeordnet, die beim gegenseitigen annähern selbsttätig und formschlüssig zu einem in sich starren Zug/Schubglied verrastbar sind. Die Heckkupplung 10 bzw. 10′ ist sehr kurz, so daß der Omnibus durch eine herausragende Heckkupplung nicht in unzumutbarer Weise verunstaltet wird, zumal der Heckbereich ohnehin häufig Kupplungseinrichtungen aufweist. Die Kupplungseinrichtung kann soweit ins Innere des Fahrzeuges hinein verlegt werden, daß der Heckkupplungskopf 13 bzw. 30 (Figur 3) nahezu bündig mit der rückseitigen Stirnwand 16 zu liegen kommt. Für die Heckkupplung ist daher in der Regel auf eine Einziehbarkeit aus Gründen der Ästhetik verzichtbar. Außerdem ist bei nicht einziehbarer Heckkupplung diese stets für einen von hinten sich annähernden anzukuppelnden Omnibus zugänglich, so daß nicht erst über einen umständlichen Kommunikationsvorgang zwischen den beiden Omnibussen eine entsprechende Bereitschaft der Heckkupplung herbeigeführt zu werden braucht.

Anders ist es hingegen mit der Frontkupplung 9, 9′ bzw. 9″ des zweiten Omnibusses 2, von dem aus der Ankuppelvorgang vorgenommen bzw. gesteuert werden soll. Die Frontkupplung 9, 9′ bzw. 9″ der gezeigten Ausführungsbeispiele ist in Form einer aus der vorderen Stirnwand 15 des Omnibusses 2 in Fahrtrichtung 3 ferngesteuert ausfahrbare Stange 14, 14′ bzw. 14″ ausgebildet, die bei Nichtgebrauch der Frontkupplung in die Fahrzeugkontur auch wieder einziehbar ist, so daß beim Einzeleinsatz des Fahrzeuges dieses sein gewohntes formschönes Aussehen beibehält. Zweckmäßigerweise kann aus Gründen eines formschönen Aussehens, aber auch aus Gründen eines Spritzschutzes die Öffnung in der vorderen Stirnwand 15, hinter die die Frontkupplung 9 zurückziehbar ist, bei Nichtgebrauch durch einen Schieber verschließbar sein. Dieser Schieber kann zweckmäßigerweise gleichzeitig mit dem ferngesteuerten Verschieben der Frontkupplung ebenfalls ferngesteuert betätigbar sein. Damit die aneinander gekuppelten Omnibusse trotz der schubsteifen Stange 14 und der zu einer unbeweglichen Einheit verrasteten Front- und Heckkupplungsköpfe 12 und 13 sich dennoch in Horizontal- und Vertikalrichtung zueinander bewegen und auch unabhängig voneinander Roll- bzw. Wankbewegungen ausführen können, sind im vorderen und hinteren Bereich der Stange entsprechende Horizontalschwenklager 11, 11′ bzw. 29 angebracht, die außer einer horizontalen Schwenkbarkeit auch noch eine Schwenkbarkeit in den anderen angesprochenen Bewegungsrichtungen zulassen. Bei den Ausführungsbeispielen nach den Figuren 1, 2, und 4 bis 7 ist das vordere Horizontalschwenklager 11 vor dem Heckkupplungskopf 13 und das hintere Horizontalschwenklager 11′ am rückwüartigen Ende der Stange 14 angebracht; in jedem Fall ist das entsprechende Horizontalschwenklager im Bereich der vorderen bzw. hinteren Stirnwand 15 bzw. 16 angeordnet. Ähnlich ist est auch beim Ausführungsbeispiel nach Figur 3; auch hier ist das hintere Horizontalschwenklager 11′ im Bereich der vorderen Stirnwand 15 bei ausgefahrener Stange 14′ angeordnet. Im Unterschied zum Ausführungsbeispiel nach den Figuren 1 und 2 ist jedoch das vordere Horizontalschwenklager 29 hinter dem Frontkupplungskopf 12 im Bereich der Stange 14′ angebracht. Der Heckkupp lungskopf 30 kann aus diesem Grunde in besonders einfacher Weise starr dem vorderen Omnibus 1 zugeordnet sein; allenfalls kann dieser Heckkupplungskopf 30 leicht drehbar um eine zur Fahrtrichtung 3 parallele Achse angebracht sein, um die beiden aneinander gekuppelten Fahrzeuge 1 und 2 unabhängig voneinander Rollbewegungen ausführen lassen zu können.

In konstruktiv besonders einfacher Weise sind die Front- und die Heckkupplung 9 bzw. 10 außermittig an dem fahrerplatzseitigen Rahmenlängsträger 22 bzw. 23 angebracht. Dadurch wird eine Traverse für eine mittige Anbringung der Front- bzw. Heckkupplungen eingespart; außerdem ist an den Stellen der Rahmenlängsträger der Fahrzeugrahmen besonders hoch belastbar. Die Auswahl des fahrerseitigen Rahmenlängsträgers ist deswegen besonders zweckmäßig, weil dann die Front- bzw. Heckkupplungsköpfe beim Ankuppelvorgang vom Fahrzeuglenker aus besonders gut einsehbar sind. Zwar haben die Rahmenlängsträger im Frontbereich bzw. im Heckbereich eine unterschiedliche seitenposition, so daß sich, im Grundriß nach Figur 2 bzw. Figur 3 gesehen, eine zur Fahrtrichtung 3 geneigte Anordnung der Stange 14 bzw. 14′ ergibt. Diese Schräglage der Stange ist jedoch aus weiter unten noch zu erörternden Gründen in der Praxis unbedenklich, weil die Stange nur auf Schub- bzw. Zugkraftunterschiede belastet ist und nur als Abstandhalter dient; diese Funktion kann die Stange ohne weiteres auch in Schräglage und bei außermittiger Anordnung ausüben.

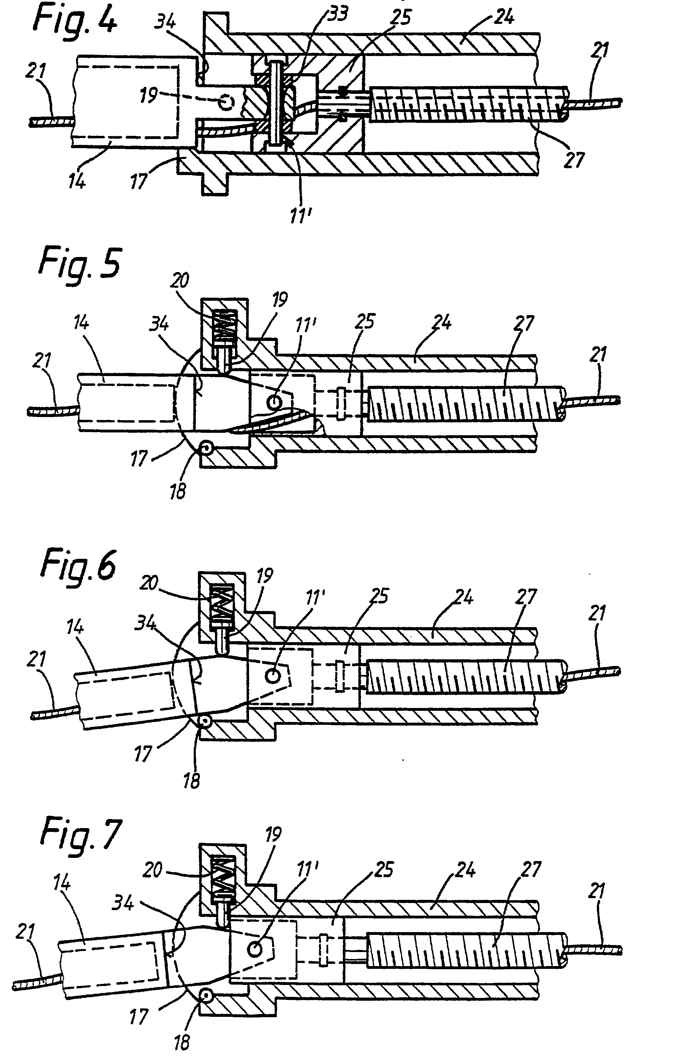

Die Stange 14, 14′ bzw. 14″ der Frontkupplung 9, 9′ bzw. 9″ ist zum Einziehen bzw. Ausfahren in einem Führungsrohr 24, 24′ bzw. 24″ geführt; letzteres ist in den vorderen fahrerseitigen Rahmenlängsträger 22 baulich integriert. Am rückwärtigen Ende der Stange 14, 14′ bzw. 14″ ist diese über das bereits erwähnte hintere Horizontalschwenklager 11′ bzw. 11″ mit einem im Führungsrohr 24, 24′ bzw. 24″ verschiebbaren Verschiebkopf 25 bzw. 25′ verbunden. Der Verschiebekopf 25 bzw. 25′ hat ebenso wie das Führungsrohr 24, 24′ bzw. 24″ unrunden, vorzugsweise rechteckigen Querschnitt, wodurch der Verschiebekopf 25 verdrehgesichert geführt ist. Gleiches gilt im übrigen fur die Stange 14′; auch sie füllt im wesentlichen den rechteckigen Lichtraum des Führungsrohres 24 vollständig aus und ist darin spielarm geführt. Bei dem Ausführungsbeispiel nach Figur 4 bis 7 ist das hintere Horizontalschwenklager 11′ derart ausgeführt, daß es auch Vertikalschwenkbewegungen der Stange 14 zuläßt, was beispielsweise dadurch gelöst ist, daß das entsprechende Auge an der Stange stark ballig oder doppelkonisch ausgeführt und ober- und unterseitig mit Gummizwischenlagen gehalten ist.

Der Verschiebekopf 25 bzw. 25' ist mittels eines Gewindetriebes verschiebbar. Bei dem Ausführungsbeispiel nach Figur 4 bis 7 ist zu diesem Zweck der Verschiebekopf 25 mit einem Gewinderohr 27 verbunden. Und zwar ist das Gewinderohr axial unnachgiebig aber verdrehbar mit dem Verschiebekopf 25 verbunden. Das Gewinderohr 27 ragt in eine axial feststehende drehantreibbare Mutter hinein und kann durch diese axial verschoben werden. In Figur 2 ist der entsprechende Antrieb 26 schematisch dargestellt. Die rohrförmige Gestalt der Gewindespindel is deswegen vorgesehen, um durch das Gewinderohr 27 hindurch Steuerleitungen 21 verlegen zu können, über deren Bedeutung noch zu sprechen sein wird.

In dem für das Ankuppeln erforderlichen zumindest teilweise ausgefahrenen Zustand der Stange 14 ist diese bezüglich der Vertikal- und der Horizontalrichtung derart gehalten, daß die beiden miteinander zu verrastenden Front- bzw. Heckkupplungsköpfe 12 bzw. 13 in Höhen- und Seitenrichtung aufeinandertreffen, wenn die beiden aneinander zu kuppelnden Omnibusse 1 und 2 in Fahrtrichtung 3 fluchtend hintereinander stehen. Eine kleine Lageabweichung kann in gewissen Grenzen zugelassen werden; diese Lageungenauigkeit kann durch gegenseitige trichterartige Ausbildung der Verrastungselemente die eine entsprechende Einfangbewegung auslöst, ausgeglichen werden. Bei dem in den Figuren 4 bis 7 dargestellten Ausführungsbeispiel ist die Vertikalausrichtung der Stange in nahezu ausgefahrenem Zustand durch den Vertikalanschlag 17 am vorderen Ende des Führungsrohres 24 gebildet, auf der die Stange 14 mit ihrem hinteren Ende Schwerkraftbedingt aufliegt. In vollständig ausgefahrenem Zustand der Stange überfährt deren Hinterkante 34 diesen Anschlag 17 und kann in angekuppeltem Zustand auch in Vertikalrichtung behinderungsfrei bewegt werden. Dieser vollständig ausgefahrene Zustand ist in Figur 7 in Grundrißdarstellung gezeigt. Nachdem davon ausgegangen werden kann, daß die Höhenlage des Heckkupplungskopfes bei allen Fahrzeugen gleich ist und nicht von dem genauen Fluchten der hintereinander stehenden Fahrzeuge abhängt, kann eine entsprechende Horizontalausrichtung der Stange konstruktiv relativ genau vorgegeben werden und auf eine entsprechende Einstellbarkeit weitgehend verzichtet werden. Unter Umständen kann durch Auswahl eines geeigneten ringförmigen Gummipuffers 33 hinsichtlich Gummihärte und/oder Axialabmessung eine entsprechende Vertikalausrichtung erreicht werden.

Anders ist es hingegen bei der Ausrichtung der Stange 14 in Seitenrichtung, wie sie in den Grundrißdarstellungen nach Figur 2 bzw. nach den Figuren 5 bis 7 erkennbar ist. Hier ist eine seitliche Ausrichtmöglichkeit der Stange 14 dadurch geschaffen, daß im vorderen Bereich des Führungsrohres 24 auf derjenigen Seite, zu der die Stange 14 hin abgewinkelt ist, ein Seitenanschlag 18 für die Stange 14 und daß auf der gegenüberliegenden Seite ein unter Vorspannung einer Druckfeder 20 Stehender Druckbolzen 19 angeordnet ist. Solange die Stange 14 noch teilweise im Führungsrohr 24 drin steckt, wird sie die in Figur 5 gezeigte, zum Führungsrohr 24 fluchtende Lage einnehmen. Sobald jedoch die Hinterkante 34 der Stange 14 den führungswirksamen Teil des Führungsrohres 14 verlassen hat, wird die Stange durch die Wirkung der Druckfeder 20 seitlich zum Anschlag 18 hin abgedrängt. Durch gezieltes Vor- oder Zurückschieben des Verschiebekopfes 25 kann nun die seitliche Schräglage der Stange 14 verändert werden: Beim Zurückziehen des Verschiebekopfes wird die seitliche Abwinkelung geringer und mit zunehmendem Ausschieben des Verschiebekopfes 25 wird die Stange 14 sich mehr und mehr zur Seite neigen. Nachdem der Fahrer diese Bewegung ferngesteuert vorgeben und unter seiner Sicht auch kontrollieren kann, kann er eine relativ gute Lageübereinstimmung zwischen Front- und Heckkupplungskopf der aneinanderzukuppelnden Omnibusse in Horizontalrichtung auch ohne Rangierbewegungen herbeiführen.

An dieser Stelle sei eine andere Möglichkeit zur Seitenausrichtung der Stange 14 erwähnt: Und zwar ist es denkbar, den Seitenanschlag 18 auch beweglich anzuordnen und mit einem fernsteuerbaren Stellantrieb zu versehen. Durch ferngesteuer te Verlagerung des Seitenanschlages 18 könnte dann ebenfalls eine entsprechende Seitenausrichtung der Stange 14 bzw. des Frontkupplungskopfes 12 vorgenommen werden.

Dank der geschilderten konstruktiven Möglichketien können also zwei Busse ferngesteuert vom Fahrersitz des hinteren Busses aus aneinander gekuppelt werden, ohne daß dazu eine weitere Person erforderlich wäre oder der Fahrer aussteigen muß.

Um mit einem solchen Zug von Omnbussen einen störungsfreien Fahrbetrieb zu ermöglichen, und die Gefahr eines Ausknickens aufgrund der schräg liegenden Stange 14 zu vermeiden, ist bei den einzelnen Omnibussen vorgesehen, daß wengistens die Fahrfunktionen, wie. z. B. Traktion, Getriebeschaltung und Bremsen in an sich bekannter Weise jeweils vom Fahrerplatz aus ferngesteuert betätigbar sind. Neben den Kupplungsköpfen 12 und 13 sind auch noch Mehrfachsteckkupplungen für Druckluft und elektrische und/oder fluidische Steuerleitungen 21 für diese Fahrfunktionen vorgesehen. Diese Mehrfachsteckkupplungen werden gleichzeitig und ebenfalls selbsttätig beim Einrasten der Kupplungsköpfe mit zusammengekuppelt. Durch das Zusammenstecken der Steuerleitungen werden die darin ansteuerbaren Fahrfunktionen selbsttätig auf den Fahrerstand des ersten Omnibusses an der Spitze des Zuges umgeschaltet, so daß sämtliche im Zugverbund miteinander verkuppelten Omnibusse gleichzeitig und gleichmäßig bezüglich ihrer Fahrfunktionen ansteuerbar sind. Nachdem diese Technik aus dem Bereich der Schienenfahrzeuge bereits bekannt ist, ist hier nicht näher auf die entsprechende Umschaltmöglichkeit eingegangen. Es sei lediglich so viel erwähnt, daß zur Fernbedienung der jeweiligen Fahrfunktionen ein Sensor element an dem entsprechenden Gas- oder Bremspedal bzw. am Schalthebel angebracht ist, welches stellungsabhängig ein entsprechendes elektrisches Signal erzeugt, welches am Antriebsmotor bzw. an den Bremsen servounterstützt in ein entsprechendes Stellsignal umgewandelt wird. Durch die Ankupplung des zweiten Busses an den ersten werden nun einfach die Sensorelemente vom Fahrerstand des ersten Busses parallel geschaltet zu den Sensorelementen am Fahrerstand des zweiten Busses, so daß die Stellglieder am Motor bzw. an den Bremsen von zweiten Omnibus vom Fahrerstand des ersten Busses aus ansteuerbar sind, genauso als ob die Ansteuerung vom Fahrerstand desselben Omnibusses erfolgen würde. Dadurch kommt die bereits erwähnte gleichzeitige und gleichmäßige Ansteuerung aller angekoppelten Omnibusse zustande, so daß alle Busse im gleichen Ausmaß hinsichtlich Traktion bzw. Bremsung angesteuert werden. Etwaige Traktionsunterschiede sind nur relativ klein und führen nur zu relativ geringen Belastungen der Kuppelstangen zwischen den Omnibussen diese haben - wie gesagt - lediglich die Aufgabe, die aneinandergekuppelten Omnibusse auf konstante Distanz zu halten, nicht jedoch den Zweck, Zug- oder Bremskräfte zu übertragen, wenngleich sie diese Funktion in beschränktem Ausmaße auch übernehmen. Dank der geringen Zug- oder Druckbelastung der Kuppelstangen können die aneinander gekuppelten Omnibusse auch bei Schräglage und bei außermittiger Anordnung der Stangen sicher auf Spur gehalten werden. Etwaige Querkraftkomponenten, die dadurch eingeleitet werden, können durch die Fahrzeugräder in jedem Fall sicher aufgefangen werden.

Der Vorteil der erfindungsgemäßen Omnibusausgestaltung liegt darin, daß die Omnibusse ohne umständliches Hantieren und ohne zusätzliche Hilfskraft rasch aneinander gekuppelt oder voneinander gelöst werden können und daß sie ihr gewohntes und vom Publikum akzeptiertes Aussehen beibehalten können. Dank der Verkupplung mehrerer Omnibusse von unterschiedlichen Linien auf gemeinsam befahrenen Streck zu einem einheitlichen Zug können auf diesen gemeinsamen Fahrstrecken höhere Fahrzeugdichten zugelassen werden.

## Patentansprüche

1. Zur Zugbildung geeigneter, selbsttätig antreibbarer und wahlweise frei lenkbarer oder spurführbarer Omnibus, der über eine teilbare Kupplungseinrichtung (8, 8') mit einem anderen gleichartigen Omnibus verbindbar ist, von welcher Kupplungseinrichtung der eine Teil - Frontkupplung (9, 9', 9") - im Frontbereich und der andere Teil - Heckkupplung (10, 10') - im Heckbereich eines jeden zur Zugbildung vorgesehenen Omnibusses jeweils gelenkig angelenkt ist, wobei die für eine horizontale Verschwenkung vorgesehenen Horizontalschwenklager (11, 11', 11") der Front- bzw. der Heckkupplung im Grundriss des Omnibusses diesem jeweils lagedefiniert zugeordnet sind, welche Front- bzw. Heckkupplung jeweils mit einem einander entsprechendem Front- bzw. Heckkupplungskopf (12, 13, 30) versehen sind und beim gegenseitigen annähern einer Frontkupplung eines Omnibusses (2) an die Heckkupplung eines anderen, gleichartigen Omnibusses (1) mit ihren Kupplungsköpfen selbsttätig formschlüssig zu einem in sich starren Zug/Schubglied verrastbar sind, **gekennzeichnet** durch die Kombination folgender Merkmale:

a) wengistens die Frontkupplung (9, 9' 9") ist in Form einer aus der Außenkontur (Stirnwand 15) des Omnibusses (2) in Fahrtrichtung (3) ferngesteuert ausfahrbare bzw. in sie einziehbare Stange (14, 14', 14") ausgebildet, die in noch nicht vollständig ausgefahrenem Zustand nur längsbeweglich geführt ist;

b) die Horizontalschwenklager (11, 11', 11") der Front- (9, 9', 9") und der Heckkupplung (10, 10') sind - in dem für eine Ankuppelung von Omnibussen (1, 2) vorbereiteten Ausfahrzustand der Teile der Kupplungseinrichtung (8, 8') - jeweils im Bereich der vorderen (vordere Stirnwand 15) bzw. rückseitigen Außenkontur (hintere Stirnwand 16) des Omnibusses (2, 1) angeordnet;

c) in dem für das Ankuppeln erforderlichen, zumindest teilweise ausgefahrenen Zustand ist die Stange (14, 14', 14") durch Puffer, Anschläge oder dergleichen (17, 18, 19) bezüglich der Vertikal- und der Horizontalrichtung in der für das Ankuppeln der in Fahrtrichtung (3) fluchtend hintereinander stehenden Omnibusse 1, 2) erforderlichen Ankuppelstellung gehalten;

d) wenigstens die Fahrfunktionen wie Traktion, Getriebeschaltung und Bremsen der zur Zugbildung geeigneten Omnibusse (1, 2) sind jeweils vom Fahrerplatz aus ferngesteuert betätigbar;

e) neben den Kupplungsköpfen (12, 13, 30) sind auch noch Mehrfachsteckkupplungen für Druckluft und elektrische und/oder fluidische Steuerleitungen (21) für die Fahrfunktionen vorgesenen;

f) es sind Mittel zur Umschaltung der ferngesteuerten Betätigung der Fahrfunktionen vorgesehen, derart, daß die Fahrfunktionen des oder der angekuppelten Omnibusse(s) (2) simultan und gleichmäßig vom Fahrerplatz des ersten Omnibusses (1) des Zuges aus vorgebbar bzw. steuerbar sind.

2. Omnibus nach Anspruch 1, **dadurch gekennzeichnet,** daß die Front- (9, 9', 9") und/oder die Heckkupplung (10, 10') außermittig an dem fahrerplatzseitigen Rahmenlängsträger (22, 23) des Omnibusses (2, 1) angebracht sind.

3. Omnibus nach Anspruch 1 oder 2, **dadurch gekennzeichnet,** daß die Stange (14, 14', 14") der Frontkupplung (9, 9', 9") in einem Führungsrohr (24, 24', 24") geführt und in dieses einziehbar bzw. aus ihm ausfahrbar ist.

4. Omnibus nach Anspruch 1, 2 oder 3, **dadurch gekennzeichnet,** daß die Puffer, Anschläge oder dgl. zum Herbeiführen der Ankuppelstellung der ausgefahrenen Stange (14, 14', 14") der Frontkupplung (9, 9', 9") in ihrer Vorspannung oder Lage vom Fahrerplatz aus ferngesteuert veränderbar sind, derart, daß damit die Ankuppelstellung der Stange (14, 14', 14") veränderbar ist.

5. Omnibus nach einem der Ansprüche 1 bis 4 **dadurch gekennzeichnet,** daß die Front - (9, 9', 9") und/oder die Heckkupplung (10, 10') über eine Öffnung in der Omnibuskarosserie zugänglich ist, die bei Nichtgebrauch der Front- bzw. Heckkupplung durch einen Schieber verschließbar ist.

6. Omnibus nach einem der Ansprüche 1 bis 5, **da-**

durch gekennzeichnet, daß anstelle einer horizontalen und/oder vertikalen Schwenkbarkeit der Heckkupplung ein entsprechendes Gelenk (29) hinter dem Frontkupplungskopf (12) in der Stange (14') angebracht ist.

7. Omnibus nach einem der Ansprüche 3 bis 6, dadurch gekennzeichnet, daß die Stange (14, 14' 14") am rückwärtigen Ende mit einem im Führungsrohr (24, 24', 24") verbleibenden und darin verdrehsicher geführten Verschiebekopf (25, 25') über das Horizontalschwenklager (11, 11', 11") verbunden ist, welcher mittels eines durch Hilfsenergie antreibbaren (Antrieb 26) Gewindetriebes (Gewinderohr 27, 27') in das Führungsrohr (24, 24', 24") zurückziehbar bzw. ausschiebbar ist.

8. Omnibus nach einem der Ansprüche 3 bis 7, dadurch gekennzeichnet, daß die Heckkupplung (10, 10') und Frontkupplung (9, 9', 9") - in Fahrtrichtung (3) gesehen - zueinander seitenversetzt sind, derart, daß die Stellung der Stange (14, 14', 14") - im Grundriß (Figur 2 oder 3) gesehen - bei in Fahrtrichtung (3) fluchtend hintereinander befindlichen, aneinandergekuppelten Omnibussen (1, 2) gegenüber der Fahrtrichtung (3) seitlich abgewinkelt ist und daß im vorderen Bereich des Führungsrohres (24, 24', 24") auf derjenigen Seite, zu der die Stange (14, 14', 14") hin abgewinkelt ist, ein Seitenanschlag (18) für die Stange (14, 14', 14") und daß auf der gegenüberliegenden Seite ein unter Vorspannung (Druckfeder 20) stehender Druckbolzen (19), eine Druckrolle oder dgl. angeordnet ist.

## Revendications

1. Autobus pouvant être entraîné automatiquement, pouvant sélectivement être dirigé librement ou guidé sur voie, approprié pour la formation d'un train et qui peut être relié avec un autre autobus de même type par l'intermédiaire d'un dispositif d'accouplement séparable (8, 8') dont une partie-accouplement avant (9, 9', 9") – est reliée de façon articulée à une zone avant de chaque autobus prévu pour la formation d'un train tandis que l'autre partie – accouplement arrière (10, 10') – est reliée de façon articulée à une zone arrière de chaque autobus prévu pour la formation du train, les paliers de pivotement horizontal, prévus pour un pivotement horizontal, (11, 11', 11") de l'accouplement avant et de l'accouplement arrière ayant, en considérant l'autobus en vue en plan, une position bien définie par rapport à celui-ci, lesdits accouplements avant et arrière étant respectivement pourvus d'une tête d'accouplement avant et d'une tête d'accouplement arrière (12, 13, 30) se correspondant mutuellement tandis que, lors du rapprochement mutuel d'un accouplement avant d'un autobus (2) par rapport à l'accouplement arrière d'un autre autobus de même type (1), les accouplements sont automatiquement verrouillables par conjugaison de formes de façon à constituer un organe de traction/poussée intrinsèquement rigide, caractérisé par la combinaison des particularités suivantes:

a) au moins l'accouplement avant (9, 9', 9") est agencé sous la forme d'une barre (14, 14', 14") pouvant être rentrée ou sortie, par télécommande, par rapport au contour extérieur (paroi frontale 15) de l'autobus (2) dans le sens de marche (3), ladite barre étant guidée, dans une condition non encore complètement sortie, seulement dans son mouvement longitudinal;

b) les paliers de pivotement horizontal (11, 11', 11") de l'accouplement avant (9, 9', 9") et de l'accouplement arrière (10, 10') sont respectivement disposés – dans la condition de sortie des parties du dispositif d'accouplement (8, 8') en préparation à un accouplement d'autobus (1, 2) – respectivement dans une zone du contour extérieur avant (paroi frontale avant 15) ou du contour extérieur arrière (paroi frontale arrière 16) de l'autobus (2, 1);

c) dans la condition de sortie au moins partielle, nécessaire pour l'accouplement, la barre (14, 14', 14") est maintenue par des tampons, des butées ou analogues (17, 18, 19), par rapport à la direction verticale et à la direction horizontale, dans la position d'accouplement nécessaire pour la liaison des autobus (1, 2) placés l'un derrière l'autre en coïncidence dans le sens de marche (3);

d) au moins les fonctions de marche, comme la traction, le passage des vitesses et le freinage des autobus (1, 2) appropriés pour la formation d'un train, peuvent être activées par télécommande respectivement à partir du poste de conduite;

e) en dehors des têtes d'accouplement (12, 13, 30), il est également prévu pour les fonctions de marche des raccords à enfichages multiples pour l'air comprimé et des conducteurs électriques et/ou conduits de fluide de commande (21);

f) il est prévu des moyens pour une inversion de l'activation télécommandée des fonctions de marche de telle sorte que les fonctions de marche du ou des autobus accouplés (2) puissent être préréglées ou commandées simultanément et uniformément à partir du poste de conduite du premier autobus (1) du train.

2. Autobus selon la revendication 1, caractérisé en ce que l'accouplement avant (9, 9', 9") et/ou l'accouplement arrière (10, 10') sont disposés de façon excentrée sur le longeron de châssis (22, 23) placé du côté du poste de conduite de l'autobus (2, 1).

3. Autobus selon la revendication 1 ou 2, caractérisé en ce que la barre (14, 14', 14") de l'accouplement avant (9, 9', 9") est guidée dans un tube de guidage (24, 24', 24") et peut être entrée dans celui-ci ou sortie de celui-ci.

4. Autobus selon une des revendications 1, 2 et 3, caractérisé en ce que les tampons, butées ou analogues servant à guider la barre sortie (14, 14', 14") de l'accouplement avant (9, 9', 9") jusque dans la position d'accouplement sont réglables en précontrainte ou en position par télécommande à partir du poste de conduite de telle sorte qu'ainsi la position d'accouplement de la barre (14, 14', 14") soit modifiable.

5. Autobus selon une des revendications 1 à 4, caractérisé en ce que l'accouplement avant (9, 9', 9") et/ou l'accouplement arrière (10, 10') est accessible par l'intermédiaire d'une ouverture ménagée dans la carrosserie de l'autobus et pouvant être obturée par un volet coulissant en cas de non-utilisation de l'accouplement avant ou de l'accouplement arrière.

6. Autobus selon une des revendications 1 à 5, caractérisé en ce que, à la place d'une possibilité de pivotement horizontal et/ou vertical de l'accouplement arrière, une articulation correspondante (29) est disposée dans la barre (14') en arrière de la tête (12) de l'accouplement avant.

7. Autobus selon une des revendications 3 à 6, caractérisé en ce que la barre (14, 14', 14") est reliée par son extrémité, par l'intermédiaire du palier de pivotement horizontal (11, 11', 11"), à une tête de translation (25, 25'), restant dans le tube de guidage (24, 24', 24") et guidée sans possibilité de rotation dans celui-ci, cette tête pouvant être sortie ou rentrée dans le tube de guidage (24, 24', 24") au moyen d'un mécanisme à filetage (tube fileté 27, 27') pouvant être entraîné par une source d'énergie auxiliaire (entraînement 26).

8. Autobus selon une des revendications 3 à 7, caractérisé en ce que l'accouplement arrière (10, 10') et l'accouplement avant (9, 9', 9") sont décalés latéralement l'un par rapport à l'autre – en considérant le sens de marche (3) – de telle sorte que la position de la barre (14, 14', 14") – considérée en vue en plan (figure 2 ou 3) – soit inclinée latéralement par rapport au sens de marche (3), dans le cas d'autobus (1, 2) accouplés l'un avec l'autre et situés l'un derrière l'autre en coïncidence dans le sens de marche (3), et en ce que, dans la zone avant du tube de guidage (24, 24', 24"), il est prévu, du côté vers lequel la barre (14, 14', 14") est inclinée, une butée latérale (18) pour la barre (14, 14', 14"), et en ce qu'il est prévu sur le côté opposé une broche de pression (19), un galet de pression ou analogue, soumis à une précontrainte (ressort de pression 20).

## Claims

1. Omnibus which is suitable for forming a combination of vehicles, can be driven automatically and alternatively steered freely or track-guided and which can be connected to another similar omnibus via a separable coupling device (8, 8'), of which coupling device one part – the front coupling (9, 9', 9") – is articulated in the front section and the other part – the rear coupling (10, 10') – in the rear section of each omnibus provided for forming the vehicle combination, the horizontal pivot bearings (11, 11', 11") of the front or rear coupling which are provided for horizontal pivoting each being associated with the omnibus in a specified position in the plan view of the latter, which front and rear couplings are provided respectively with front and rear coupling heads (12, 13, 30) corresponding to one another and, when a front coupling of an omnibus (2) and the rear coupling of another similar omnibus (1) are brought closer together, these couplings can be locked by their coupling heads automatically and positively to form a potentially rigid traction/propulsion member, characterised by the combination of the following features:
a) at least the front coupling (9, 9', 9") is in the form of a rod (14, 14', 14") which, by remote control, can be extended out of or retracted into the outer profile (end wall 15) of the omnibus (2) in the direction of travel (3) and which is guided only with a longitudinal movement when not yet in the fully extended state;
b) the horizontal pivot bearings (11, 11', 11") of the front coupling (9, 9', 9") and the rear coupling (10, 10') are arranged respectively in the area of the front (front end wall 15) or rear outer profile (rear end wall 16) of the omnibus (2, 1) when the parts of the coupling device (8, 8') are in the extended state ready for coupling omnibuses (1, 2);
c) when in the at least partially extended state necessary for coupling, the rod (14, 14', 14") is maintained by buffers, stops or the like (17, 18, 19), relative to the vertical and horizontal directions, in the coupling position necessary for coupling the omnibuses (1, 2) which are in alignment one behind the other in the direction of travel (3);
d) at least the driving functions, such as traction, gear shifting and braking, of the omnibuses (1, 2) suitable for forming a vehicle combination can each be actuated by remote control from the driver's seat;
e) in addition to the coupling heads (12, 13, 30) there are also provided multiple insert couplings for compressed air and electrical and/or fluidic control lines (21) for the driving functions;
f) means of switching over the remote-controlled operation of driving functions are provided in such a manner that the driving functions of the coupled omnibus or omnibuses (2) can be preset or controlled simultaneously and constantly from the driver's seat of the first omnibus (1) of the vehicle combination.

2. Omnibus according to Claim 1, characterised in that the front coupling (9, 9', 9") and/or the rear coupling (10, 10') are fitted eccentrically to the chassis frame side member (22, 23) on the driver's seat side of the omnibus (2, 1).

3. Omnibus according to Claim 1 or 2, characterised in that the rod (14, 14', 14") of the front coupling (9, 9', 9") is guided in a guide tube (24, 24', 24") and can be extended out of or retracted into this tube.

4. Omnibus according to Claim 1, 2 or 3, characterised in that the buffers, stops or the like for creating the coupling position of the extended rod (14, 14', 14") of the front coupling (9, 9', 9") can have their pretensioning or position varied by remote control from the driver's seat in such a manner that the coupling position of the rod (14, 14', 14") can thus be varied.

5. Omnibus according to any one of Claims 1 to 4, characterised in that the front coupling (9, 9', 9") and/or the rear coupling (10, 10') is accessible via an opening in the omnibus body, which opening can be closed by a slider when the front or rear coupling is not in use.

6. Omnibus according to any one of Claims 1 to 5, characterised in that instead of the rear coupling having horizontal and/or vertical pivotability, a corresponding link (29) is fitted in the rod (14') behind the front coupling head (12).

7. Omnibus according to any one of Claim 3 to 6, characterised in that the rear end of the rod (14, 14', 14") is connected to a sliding head (25, 25'), which remains in the guide tube (24, 24', 24") and is guided non-rotatably therein, via the horizontal pivot bearing (11, 11', 11"), which sliding head can be retracted into or extended out of the guide tube (24, 24', 24") by means of a threaded drive (threaded tube 27, 27') which can be driven by auxiliary power (drive 26).

8. Omnibus according to any one of Claims 3 to 7, characterised in that the rear coupling (10, 10') and front coupling (9, 9', 9") – when seen in the direction of travel (3) – are laterally offset relative to one another in such a manner that the position of the rod (14, 14', 14") – when seen in plan view (Figure 2 or 3) – is offset laterally relative to the direction of travel (3) in the case of coupled together omnibuses (2, 1) situated in alignment one behind the other in the direction of travel (3), and that a lateral stop (18) for the rod (14, 14', 14") is arranged in the front area of the guide tube (24, 24', 24") on that side towards which the rod (14, 14', 14") is angled, and that a pressure bolt (19) subjected to pretensioning (compression spring 20), a pressure roller or the like is arranged on the oppositely lying side.

Fig. 1

Fig. 2

Fig. 3

EP 0 277 305 B1

Fig. 4

Fig. 5

Fig. 6

Fig. 7

**Fig.8**

**Fig.9**